(19) Europäisches Patentamt
European Patent Office
Office européen des brevets

(11) **EP 2 313 352 B1**

(12) **EUROPÄISCHE PATENTSCHRIFT**

(45) Veröffentlichungstag und Bekanntmachung des Hinweises auf die Patenterteilung:
**08.10.2014** **Patentblatt 2014/41**

(21) Anmeldenummer: **09775592.0**

(22) Anmeldetag: **10.08.2009**

(51) Int Cl.:
***C04B 28/00*** *(2006.01)* ***C04B 28/26*** *(2006.01)*
***C04B 28/08*** *(2006.01)*

(86) Internationale Anmeldenummer:
**PCT/AT2009/000307**

(87) Internationale Veröffentlichungsnummer:
**WO 2010/017571 (18.02.2010 Gazette 2010/07)**

(54) **Galvanische Metallanode, eingebettet in ein hydraulisches Bindemittel umfassend ein latent-hydraulisches Alumosilikatglas und einen Alkaliaktivator**

Galvanic metal anode embedded in a hydraulic binder comprising a latent-hydraulic alumosilicate glass and an alkaline activator

Anode métallique galvanique encastrée dans un liant hydraulique comprenant un verre alumosilicate latent-hydraulique et un activateur alcalin

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.08.2008 AT 12372008**
**11.08.2008 AT 12382008**

(43) Veröffentlichungstag der Anmeldung:
**27.04.2011 Patentblatt 2011/17**

(73) Patentinhaber: **Schwarz, Wolfgang**
**1080 Wien (AT)**

(72) Erfinder: **Schwarz, Wolfgang**
**1080 Wien (AT)**

(74) Vertreter: **Müller Schupfner & Partner**
**Patent- und Rechtsanwaltspartnerschaft mbB**
**Bavariaring 11**
**80336 München (DE)**

(56) Entgegenhaltungen:
**EP-A- 0 786 438** **WO-A-00/46422**
**WO-A-92/04300** **DE-A1- 3 133 503**

• **DATABASE WPI Week 199337 Thomson Scientific, London, GB; AN 1993-294379 XP002562092 -& SU 1 763 404 A1 (KIEV CIVIL ENG INST) 23. September 1992 (1992-09-23)**

**Beschreibung**

Die Erfindung betrifft ein hydraulisches Bindemittel, insbesondere für den Korrosionsschutz von Stahl, sowie unter Verwendung derselben hergestellte Bindemittelmatrizes, Mörtel, Betonkleber und Anoden.

STAND DER TECHNIK

Sich hydraulisch verfestigende, auf Calcium- und Aluminiumsilikaten basierende anorganische Bindemittel sind seit alters her bekannt und werden in verschiedenen Zusammensetzungen und Eigenschaften eingesetzt, vgl. dazu die Hauptklasse C04 der Internationalen Patentklassifikation.

Die herkömmlichen hydraulischen Bindemittel, wie z.B. Portlandzement, hydraulische Kalke und Calciumaluminatzemente, erhärten zu spröden Materialien, wie z.B. Mörtel und Beton, mit im Vergleich zu den Festigkeiten hohen Elastizitätsmoduln. Weiters sind herkömmliche hydraulische Bindemittel durch einen hohen Gehalt an Calcium und ein hohes Calcium/Silicium-Verhältnis gekennzeichnet, und ihre Beständigkeit wird durch eine ausreichende Menge an gelöstem Calcium in der Porenlösung bestimmt. Wird das gelöste Calcium aus der Bindemittelmatrix ausgewaschen oder durch Karbonatisierung immobilisiert, so kann dies zu einem Zerfall der festigkeitsbildenden Mineralphasen, d.h. Calciumsilikathydrate führen. Die Dauerhaftigkeit von auf Calciumsilikaten basierenden Bindemitteln ist daher beschränkt.

Auch galvanischer Korrosionsschutz (GKS) wird schon seit vielen Jahren für den Korrosionsschutz von Stahl in Beton und von Stahlkonstruktionen, Rohrleitungen etc. eingesetzt, wie er z.B. in AT A 1344/2004, EP 1.135.538, EP 668.373 und in US-A-4.506.485 beschrieben wird. Die Wirkung des GKS beruht auf der Bildung eines galvanischen Elementes zwischen einer Opferanode und dem Stahl. Wird der galvanische Schutz für den Schutz der Stahlbewehrung in Beton eingesetzt, so wirkt der Beton als Elektrolyt. Für den Schutz von Stahlkonstruktionen wird üblicherweise ein gelförmiger flexibler Elektrolyt zwischen Stahl und galvanischer Anode aufgebracht. Meist befindet sich der gelförmige flexible Elektrolyt als klebende Schicht auf einer Metallanode. Als Anodenmaterial werden üblicherweise Zink und seine Legierungen, seltener Aluminium und seine Legierungen, eingesetzt. Die Anode wird üblicherweise auf der Oberfläche des zu schützenden Bauteiles installiert, in manchen Fällen auch als "diskrete galvanische Anode" in den Beton eingesetzt.

Nachteile der bekannten Opferanoden beim Korrosionsschutz von Stahl, insbesondere in Stahlbeton, sind, dass das Zink im Kontakt mit Calciumionen, insbesondere Calciumhydroxid passiviert und nach kurzer Zeit inaktiv wird. Die bekannten Opferanoden, wie z.B. mittels Plasmaspray-Verfahren nach dem Grillo-KKS-Verfahren (WO 2005/03061) auf die Betonoberfläche aufgetragenes Zink, sind daher nur bei hoher Feuchte und hohen Chloridgehalten wirksam. Trocknet das System einmal aus, so passiviert das Zink irreversibel. Um diesen Nachteilen zu entgehen, wurden so genannte Einzelanoden, wie sie etwa in US-A-6.572.760 (B2) beschrieben sind, entwickelt. Das Problem der Passivierung des Zinks wurde dadurch gelöst, dass dem Bindemittel, in das das Zink eingebettet ist, Alkalien, üblicherweise Alkalhydroxide, zugemischt werden. Die Praxis zeigt, dass für eine ausreichende Aktivität der Zinkanoden ein pH von etwa 14 erforderlich ist. Dadurch sind diese Einzelanoden nur mit erheblichen Sicherheitsmassnahmen, wie sie für hochalkalische korrosive Baustoffe üblich sind, auf der Baustelle einsetzbar. Zudem zeigte sich, dass die Alkalinität mittelfristig durch die galvanische Reaktion abgebaut wird und das Zink, vor allem in Bauteilen, die Trocken/Feucht-Zyklen ausgesetzt sind, passiviert. Zudem können sich Alkalien in Beton infolge der Alkali-Silika-Reaktion negativ auf die Festigkeit des Betons auswirken.

Die Druckschrift WO 00/46422 offenbart eine galvanische Metallanode, umfassend ein Metall, wie Zink, Magnesium oder Aluminium welche in eine Bindemittelmatrix/Mörtelmatrix aus Portlandzement eingebettet ist. Die Anode wird zum Korrosionsschutz der Stahlbewehrung in Beton benutzt. Jedoch hat die Mörtelmatrix einen pH-Wert größer als 12 und bevorzugt größer als 14.

Ziel der Erfindung war vor diesem Hintergrund die Bereitstellung eines hydraulischen Bindemittels sowie einer daraus hergestellten Opferanode, mit denen die obigen Nachteile weitgehend oder gänzlich behoben werden können.

OFFENBARUNG DER ERFINDUNG

Dieses Ziel erreicht die vorliegende Erfindung durch Bereitstellung einer galvanischen Metallanode, umfassend zumindest ein Metall oder zumindest eine Metalllegierung, eingebettet in ein hydraulischen Bindemittel, wobei das hydraulische Bindemittel K, Ca, Alumosilikate, sowie gegebenenfalls Li, Na, und Mg, sowie die folgenden Komponenten umfasst:

a) latent hydraulisches Alumosilikatglas mit einem Verhältnis von $(CaO+MgO+Al_2O_3)/SiO_2 > 1$
und
b) Alkaliaktivator in der Form von Alkaliwasserglas der Summenformel (I)

$$a(M_2O) *_x(SiO_2) *_y(H_2O) \qquad (I)$$

wobei M = Li, Na, K, a = 0-4 sowie x = 0-5 und y = 3-20 bedeuten,
wobei das Molverhältnis von Ca/Si < 1, das Molverhältnis von Al/Si < 1 und das Molverhältnis von M/Si > 0,1 ist.

Bereits mit dieser einfachsten Ausführungsform sind gegenüber dem Stand der Technik folgende Vorteile erzielbar: Das Bindemittel zeichnet sich vor allem durch eine sehr hohe Elastizität bei hoher Festigkeit aus. Übliche Mörtel und Betone aus hydraulischen Bindemitteln weisen bei Druckfestigkeiten von 15 bis 25 MPa E-Moduln von 18 bis 24 GPa auf, die anhand der allgemein bekannten Formel (I) gemäß dem amerikanischen Zementverband ACI 318-95 und ACI 318-89 berechnet werden können:

$$Ec = 4{,}73(f'_c)^{0,5} \; (I)$$

mit: Ec = Elastizitätsmodul in GPa
$f'_c$ = Druckfestigkeit in MPa
Für Betone in der Festigkeitsklasse 16/20 MPa ist gemäß ÖNORM 4700 ein E-Modul von 27 GPa charakteristisch.
Zum Unterschied zu dem in AT177072T, DE 59109105D und US 5.372.640 beschriebenen Tectoalumosilikatzement kommt im Bindemittel kein Mikrosilika zum Einsatz. Das Bindemittel ist hart und elastisch und unter Druck verformbar - und das bei hohen Festigkeiten. Es eignet sich daher insbesondere auch für die Herstellung von dünnen Platten und Fliesen und für die Herstellung von Beschichtungen auf Beton und Metall. Für beide Anwendungszwecke sind eine hohe Elastizität und ein erhöhtes Kriechen von grossem Vorteil.
Eine Bindemittelmatrix hat auch die besondere Eigenschaft, dass sie zwar aus zwei Komponenten hergestellt wird, die beide alkalisch sind (z.B. Komponente A: pH 10,35, Komponente B: 13,94, Mischung von A+B: pH 13,21). Unmittelbar nach dem Mischen und vor dem Erhärten beträgt der pH-Wert 13,21 , nach dem Erhärten beträgt der pH-Wert 10,48. Die erhärtete Bindemittelmatrix unterscheidet sich daher deutlich von den erhärteten hydraulischen Bindemitteln nach dem Stand der Technik, wie etwa Portlandzement: pH 13,6; Romanzement: pH 13,1 ; Hydraulischer Kalk: pH 12,6.
Bei dem latent hydraulischen Alumosilikatglas (LHASG) im hydraulischen Bindemittel handelt es sich um ein Material, das - vor allem im gemahlenen Zustand bzw. im Pulverzustand - in der Lage ist, mit Calciumhydroxid zu reagieren und zu erhärten, d.h. "hydraulisch aktiv" zu werden, sobald es durch einen Aktivator aktiviert worden ist. Vorzugsweise wird dafür Hochofenschlacke eingesetzt, es können aber auch Schlacken aus anderen Prozessen, z.B. aus anderen Verhüttungsprozessen, Schmelzprozessen, bei denen ein schlackenartiges Material entsteht, wie z.B. Stahlschlacken, Schmelzkammer-Flugaschen oder auch Flugaschen aus Kohlekraftwerken mit einem hohen Glasanteil, oder jedes amorphe, glasartige Material dazu verwendet werden, das hydraulisch aktiv ist und der obigen Summenformel entspricht.
Es handelt sich bei dem Alkaliaktivator um ein Alkaliwasserglas, z.B. Natrium- oder Kaliumsilikat. Mittels des Alkali-Aktivators der Komponente b) wird die latent hydraulische Komponente a) aktiviert. In bevorzugten Ausführungsformen enthält der Alkaliaktivator zumindest ein Alkalihydroxid, das seine Wirkung verstärkt, d.h. höhere Reaktionsgeschwindigkeit beim Abbinden und höhere Festigkeit der erhärteten Produkte bewirkt. Besonders gute Ergebnisse wurden mit einem Kaliwasserglas erhalten, das 10-12 Gew.-% $K_2O$ und 20-25 Gew.-% $SiO_2$ enthielt und dem noch 10-15 Gew.-% Kaliumhydroxid zugemischt wurde.
Vorzugsweise enthält das Bindemittel zusätzlich als Komponente c) ein latent hydraulisches Zusatzmittel, z.B. ein Puzzolan, noch bevorzugter ein calciumarmes, insbesondere ein calciumfreies, latent hydraulisches Alumosilikat, um Eigenschaften wie Festigkeit und Dichte zu verbessern, da es gegebenenfalls gelöstes Calcium in der Porenlösung einer Bindemittelmatrix bindet, so eine 3-dimensionale Vernetzung der Matrix bewirkt und den Gehalt an löslichem Calciumhydroxid verringert. Das latent hydraulische Alumosilikat besteht besonders bevorzugt entweder aus einem natürlichen Puzzolan, wie z.B. Vulkanasche oder gemahlenem Tuffgestein, oder aber aus einem künstlichen Puzzolan wie etwa thermisch aktiviertem, beispielsweise zwischen 500°C und 900°C calciniertem Tonmineral, da diese Materialien leicht verfügbar und kostengünstig sind. Künstliche Puzzolane sind zudem besonders aktive latent hydraulische Alumosilikate, und calcinierte Tonmineralien haben den Vorteil, dass sie im Gegensatz zu den natürlichen Puzzolanen eine definierte Zusammensetzung und damit eine kontrollierbare Reaktivität aufweisen. Als latent hydraulisches Alumosilikat eignen sich auch latent hydraulische Kohlekraftwerksflugaschen mit einem CaO-Gehalt von < 12 Gew.-%, vorzugsweise < 8 Gew.-%. Als besonders gut geeignet haben sich auch verglaste Steinkohleflugaschen erwiesen. Generell ist hierin unter "calciumarmem latent hydraulischem Alumosilikat" ein CaO-Gehalt von < 15 Gew.-%, vorzugsweise < 10 Gew.-

%, zu verstehen.

Als besonders latent hydraulisch aktiv erwies sich Metakaolin, das aus Kaolin durch Calcinieren bei ca. 600°C hergestellt wurde. Der Test für die latente Hydraulizität ergab eine Löslichkeit von 20 Gew.-% in 1 N NaOH. Der Zusatz von latent hydraulischen Alumosilikaten erwies sich auch als vorteilhaft für die mechanischen Eigenschaften der Bindemittelmatrix: Der Zusatz bewirkt eine Erhöhung der Elastizität, des Kriechens und der Langzeitfestigkeiten (> 28 Tage).

Das Alumosilikat und das Alumosilikatglas gelten als latent hydraulisch, wenn sich von 2 g, dispergiert in 100 ml 60°C warmer 1 N Natronlauge, innerhalb von 1 Stunde mindestens 2 Gew.-% lösen. Mit diesem Test wird die latente Hydraulizität bestimmt.

Die Mengenverhältnisse der Komponenten a), b) und gegebenenfalls c) sind vorzugsweise die folgenden:

a) 100-300 Gewichtsteile latent hydraulisches Alumosilikatglas;
b) 20-150 Gewichtsteile Alkaliaktivator; und
c) gegebenenfalls 50-200 Gewichtsteile latent hydraulisches Zusatzmittel; wobei das Molverhältnis von Al/Si < 0,8 und das Molverhältnis von Ca/Si < 0,9 ist.

In diesen Verhältnissen konnten in Labor- und Praxistests die besten Ergebnisse erzielt werden, wie dies auch in den späteren Ausführungsbeispielen zum Ausdruck kommt. Das Verhältnis Alkaliaktivator zu dem hydraulischen Alumosilikatglas ist vorzugsweise so, dass der Alkaliaktivator während der Erhärtungsreaktion zu zumindest 95 %, vorzugsweise zu 99 %, aufgebraucht wird. Es hat sich gezeigt, dass mit den oben beschriebenen Mengenverhältnissen optimale Ergebnisse erzielt werden, wobei bei Zugabe des latent hydraulisch aktiven Zusatzmittels die Menge an Alkaliaktivator erhöht werden muss, um optimale Ergebnisse zu erzielen. Das Verhältnis $M_2O/(SiO_2 + Al_2O_3)$ sollte mindestens > 0,01 , vorzugsweise > 0,05 betragen. Die Eigenschaften, wie Dauerhaftigkeit, Elastizität und Festigkeit nehmen mit abnehmendem Ca/Si-Verhältnis zu, wobei das Ca/Si-Verhältnis vorzugsweise < 0,9 betragen sollte. Es zeigte sich auch, dass besonders gute Eigenschaften mit Bindemitteln erzielt wurden, in denen das Molverhältnis Al/Si < 1 , vorzugsweise < 0,8, ist.

Das Bindemittel kann in bestimmten Ausführungsformen weiters zumindest ein organisches Polymer enthalten, was speziell bei einem Einsatz als Betonbeschichtung die Neigung zu Rissbildung verringert, den E-Modul senkt und die Verarbeitbarkeit verbessert. Vorzugsweise ist das organische Polymer aus Polyacrylaten, Latex, Polyacryl-Copolymeren, Polystyrol-Copolymeren und Polystyrolbutadienen ausgewählt.

Weiters umfasst das hydraulische Bindemittel der Erfindung vorzugsweise ein lösliches Zinksalz, noch bevorzugter ein Zinksulfat-hydrat, da Zinksalze, vor allem Zinksulfat, als Abbinderegulatoren dienen, mittels derer die Abbindezeiten reguliert werden können. Zusätzlich wirkt das Zink gegen Algenbefall und Pilzbefall. Beispielsweise konnten bereits mit einem Zusatz von 0,5 Gew.-% Zinksulfat-heptahydrat die Abbindezeiten von ca. 0,5 bis 1 Stunde auf 12 bis 24 Stunden verlängert werden, ohne dass die mechanischen Eigenschaften beeinträchtigt wurden.

In bevorzugten Ausführungsformen umfasst das hydraulische Bindemittel weiters ein Lithiumsalz, vorzugsweise Lithiumchlorid, da diese Salze unter anderem die galvanische Aktivität von unter Verwendung des Bindemittels hergestellte Zinkanoden erhöhen, bei der Erhärtung des Bindemittels die Bildung besonders dauerhafter und vernetzter Alumosilikate fördern und die Alkali-Silika-Reaktion mit reaktiven Zuschlagstoffen, wie z.B. Opal- oder Grauwacke-Sanden, verhindern oder zumindest vermindern. Zur Steigerung der Leistungsfähigkeit von Zinkanoden erwies sich die Zugabe von Lithiumchlorid, z.B. eine Zumischung von 0,1 bis 2,0 Gew.-% LiCl, als besonders vorteilhaft für die Stabilität des galvanischen Stroms. Für die Ionenleitfähigkeit der Bindemittelmatrix bewirkte wiederum ein Zusatz von ca. 0,2-5,0 Gew.-%, vorzugsweise von ca. 0,4 bis 1,0 Gew.-%, an Lithiumsalzen gute Resultate. Ebenfalls im Hinblick auf die erfindungsgemäßen galvanische Metallanoden umfasst das Bindemittel vorzugsweise weiters ein Zink komplexierendes Mittel, noch bevorzugter ein Polyethylenimin oder Polyamid. Zink komplexierende Mittel verhindern die Passivierung von Zinkanoden in schwach bis mittelmässig alkalischer Umgebung. Insbesondere Polyethylenimin erhöhte die galvanische Leistung einer Zinkanode dauerhaft. Ohne Zusatz von Polyethylenimin verringerte sich die Stromabgabe der Zinkanode nach einem Jahr um 90 %. Ein Zusatz von ca. 1-3 Gew.-%, vorzugsweise 2 Gew.-%, Polyethylenimin bewirkte, dass die Abnahme der galvanischen Stromstärke nur 45 % betrug und im weiteren Verlauf stabil blieb. Durch den Einsatz von Kunststoffen als Komplexbildner können gleichzeitig die vorteilhaften Wirkungen der oben erwähnten organischen Polymere erzielt werden, und kationische, basische Polymere wie Polyethylenimin erhöhen zudem die Reaktivität der Schlacke, wirken sich positiv auf die Festigkeitsentwicklung aus und verhindern bzw. vermindern die Rissbildung in Mörteln, die aus dem Bindemittel hergestellt werden.

Weiters kann das hydraulische Bindemittel in bevorzugten Ausführungsformen ein Verdickungsmittel und/oder ein Thixotropiermittel, vorzugsweise einen Cellulosealkylether und/oder einen Stärkealkylether, umfassen. Diese erhöhen die Verarbeitbarkeit eines aus dem Bindemittel hergestellten Mörtels: Der Mörtel lässt sich leichter auftragen, da er "schmieriger" bzw. thixothrop wird, d.h. er ist weniger viskos oder sogar flüssig, wenn er aufgetragen wird, verdickt und geliert jedoch im Ruhezustand. Zudem wirken Cellulosalkylether und Stärkealkylether als Wasserrückhaltemittel und erhöhen somit die Ionenleitfähigkeit.

In weiteren Ausführungsformen ist das latent hydraulische Alumosilikatglas als Komponente b) mit Wasserstoffperoxid vermischt, um Sulfide im Alumosilikatglaspulver zu oxidieren und so in Sulfat umzuwandeln. Die in manchen Alumosilikatgläsern, vor allem in Hochofenschlacke, enthaltenen Sulfide haben sich als sehr schädlich für die Wirksamkeit der Zinkanode erwiesen. Es zeigte sich, dass die Sulfide überraschenderweise einfach durch Vermischen des gemahlenen Alumosilikatglases mit einer 3%igen Wasserstoffperoxidlösung aufoxidiert werden konnten.

Die Komponenten a) und b) - und gegebenenfalls auch c) - des hydraulischen Bindemittels der Erfindung können vorzugsweise zudem getrennt vorliegen, so dass das Bindemittel ein Zweikomponentensystem darstellt, wobei der Alkaliaktivator vorzugsweise in Wasser gelöst und das Alumosilikatglas (gegebenenfalls zusammen mit dem Zusatzmittel) entweder als Pulver oder ebenfalls bereits in Wasser, d.h. in flüssiger Form, vorliegt und der Gehalt an Alkaliaktivator und gegebenenfalls enthaltenen Alkalihydroxiden darin vorzugsweise zwischen 10 und 50 Gew.-% beträgt.

Der Vorteil dieser Ausführungsform ist, dass das die beiden Komponenten des Zweikomponentensystems, z.B. direkt auf einer Baustelle, einfacher und rascher vermischt und in eine Bindemittelmatrix übergeführt werden können, als wenn beide Komponenten in trockener Form vorliegen. In einem trockenen, pulvrigen Einkomponentensystem muss der Alkaliaktivator in trockener, aber löslicher Form vorliegen und muss erst durch die Zugabe von Wasser gelöst werden, bevor er aktiv werden kann.

In einem weiteren Aspekt betrifft die Erfindung eine unter Verwendung eines hydraulischen Bindemittels hergestellte Bindemittelmatrix, die erhalten wird, indem das hydraulische Bindemittel - in diesem Fall ein trockenes Einkomponentensystem - mit Wasser vermischt und umgesetzt wird. Vorzugsweise werden das hydraulische Bindemittel und Wasser in einer solchen Bindemittelmatrix in einem Verhältnis von 1:0,5 bis 1:4, bezogen auf die Trockensubstanz des Bindemittels, vermischt. Vorzugsweise weist die Bindemittelmatrix ein Verhältnis von $CaO/(SiO_2+Al_2O_3)$ von < 0,9, vorzugsweise < 0,5, ein Verhältnis von $CaO/SiO_2$ von < 0,9, vorzugsweise < 0,5, und ein Verhältnis von $M_2O(SiO_2+Al_2O_3)$ von > 0,01, vorzugsweise > 0,05, auf. Alternativ dazu weist die Bindemittelmatrix vorzugsweise ein Verhältnis von $CaO/(SiO_2+Al_2O_3)$ von < 0,5, vorzugsweise < 0,3, ein Verhältnis von $CaO/SiO_2$ von < 0,8, vorzugsweise < 0,5, und ein Verhältnis von $M_2O/(SiO_2+Al_2O_3)$ von > 0,02, vorzugsweise > 0,07, auf.

Eine Bindemittelmatrix mit den ersteren Verhältnissen weist eine hohe Dauerhaftigkeit, hohe Haftung (>1,5 MPa) auf dem Untergrund sowie Druckfestigkeiten im Bereich von 10 bis 35 MPa auf; eine Bindemittlematrix mit Verhältnissen wie im zweiten Fall ist vor allem für Anwendungen geeignet, die sehr hohe Dauerhaftigkeit, hohe Festigkeiten (25 bis 75 MPa), hohe Haftzugsfestigkeiten (> 2,5 MPa nach 28 Tagen) bei vergleichsweise niedrigen E-Moduln erfordern.

Prinzipiell ist festzustellen, dass dünne Platten aus sprödem Material, wie z.B. aus Portlandzementbeton, schon beim Aushärten des Betons während der Herstellung der Platten aufgrund der inneren Zugspannungen, die durch das natürliche Schwinden des Betons hervorgerufen werden, zu Rissbildungen neigen. Werden solche Platten mechanisch auf dem Untergrund fixiert, so wird die Neigung zur Rissbildung durch die geringe Kriechzahl noch verstärkt. Dasselbe gilt im verringerten Ausmaß auch für Beschichtungen auf Beton und Stahl. Das Beschichtungsmaterial muss sich Deformationen des Untergrunds aus Beton oder Stahl, z.B. aufgrund von Temperaturänderungen oder Temperaturgradienten, anpassen können, ohne zu reißen. Platten, Fliesen und Beschichtungen auf Beton und Stahl, die aus Mörtel hergestellt wurden, der eine Bindemittelmatrix enthält, zeigen auch bei hohen Belastungen keine Risse, lösen sich vom Untergrund oder zeigen Abplatzungen.

Somit stellt die Erfindung einen unter Verwendung von i) einem hydraulischen Bindemittel, ii) Wasser und iii) Zuschlagstoffen erhaltenen Mörtel bereit, durch den die zuvor erwähnten Vorteile der Erfindung im praktischen Einsatz zur Geltung kommen können. Der aus dem Bindemittel hergestellte Mörtel eignet sich insbesondere für die Herstellung von Betonbeschichtungen und für Beschichtungen auf Stahl, für die Herstellung von sehr stabilen und dauerhaften Platten und Fliesen sowie für die Herstellung von galvanischen Zinkanoden.

Als Zuschlagstoffe kommen prinzipiell alle gängigen Standardzuschlagstoffe in Frage. Besonders gute Ergebnisse wurden jedoch mit calcitischen Zuschlägen und mit Zuschlägen aus Quarzsand erzielt. Die Zuschlagstoffe müssen alkalibeständig sein, insbesondere dürfen sie nicht Alkali-Silika-reaktiv sein. Die Korngrössenverteilung sollte vorzugsweise der Fullerkurve, d.h. einer dichtesten Kugelpackung, entsprechen. Sehr gute Ergebnisse wurden mit einem Zuschlagstoff aus gemahlenem Marmor mit einer minimalen Korngrösse von 0,2 mm und einer maximalen Korngrösse von 0,5 mm für einen Verputzmörtel erzielt.

Mörtel, die aus dem Bindemittel hergestellt wurden, zeichnen sich durch sehr niedrige E-Moduln aus: Bei Druckfestigkeiten von 15-25 MPa werden E-Moduln von ca. 12 bis 15 GPa gemessen. Bei einem Mörtel, der aus dem Bindemittel aus 100-300 Gewichtsteilen latent hydraulischem Alumosilikatglas, b) 20-150 Gewichtsteilen Alkaliaktivator und c) 50-200 Gewichtsteilen latent hydraulischem Zusatzmittel, wobei das Molverhältnis von Al/Si < 0,8 und das Molverhältnis von Ca/Si < 0,9 ist, hergestellt wurde, wurde bei einer Druckfestigkeit von 20 MPa ein E-Modul von 7 GPa gemessen. Bei einem Mörtel, der aus einem erfindungsgemässen Bindemittel mit zusätzlichen Alkalihydroxid im Alkaliaktivator hergestellt wurde, wurde ein E-Modul von 5 GPa gemessen. Niedrige E-Moduln bedeuten dabei hohe Elastizität.

Weiters zeichnen sich Mörtel, die aus dem Bindemittel hergestellt wurden, durch ein gutes Kriechverhalten aus. Dies bedeutet, dass sich der erhärtete Mörtel unter Druck verformen kann. Bei aus dem Bindemittel hergestellten Mörtelprismen wurde ein Kriechzahl von ca. 0,45 mm/m gemessen; bei Mörtelprismen, die aus einem Bindemittel mit den obigen Gewichtsanteilen hergestellt wurden, wurde ein Kriechzahl von 0,54 mm/m gemessen; und bei Mörtelprismen, die aus einem Bindemittel mit Zinksalz hergestellt wurden, wurde ein Kriechzahl von 0,35 mm/m gemessen. Für übliche Mörtel und Betone sind hingegen lediglich Kriechzahlen < 0,2 mm/m charakteristisch.

Bevorzugt ist beispielsweise ein Mörtel mit einem Verhältnis Zuschlagstoffe/Bindemittel von 1 :0,25 bis 1 :4 und einem Verhältnis Bindemittel/Wasser von 0,25:1 bis 2:1. Der Erfinder hat festgestellt, dass ein solcher Mörtel:

- nach 5 Minuten bis 24 Stunden abbindet;
- 4 Stunden nach dem Abbinden, gelagert bei 20°C, eine Haftzugfestigkeit auf Beton von etwa 0,5 bis 3 MPa aufweist;
- 24 Stunden nach dem Abbinden, gelagert bei 20°C, eine Haftzugfestigkeit auf Beton von etwa 1 ,0 bis 4 MPa aufweist;
- 28 Tage nach dem Abbinden, gelagert bei 20°C, eine Haftzugfestigkeit auf Beton von etwa 1 ,5 bis 5 MPa aufweist;
- 4 Stunden nach dem Abbinden, gelagert bei 20°C, eine Druckfestigkeit von etwa 1 bis 3 MPa aufweist;
- 24 Stunden nach dem Abbinden, gelagert bei 20°C, eine Druckfestigkeit von etwa 2 bis 12 MPa aufweist; und
- 28 Tage nach dem Abbinden, gelagert bei 20°C, eine Druckfestigkeit von etwa 10 bis 30 MPa aufweist.

Diese Ergebnisse stellen zum Teil erhebliche Verbesserungen gegenüber dem Stand der Technik dar. Beispielsweise liegen die Haftzugfestigkeiten von herkömmlichen Mörteln bei ca. 0,5 bis 1 MPa nach 24 h und bei 1 ,5 bis 2,5 MPa nach 28 Tagen.

In einer weiteren bevorzugten Ausführungsform weist ein Mörtel ein Verhältnis Zuschlagstoffe/Bindemittel von 1 :0,5 bis 1 :2 und ein Verhältnis Bindemittel/Wasser von 0,25:1 bis 2:1 auf, woraus ein dynamischer E-Modul des gehärteten Mörtels von < 15 GPa, mitunter sogar < 10 GPa und somit eine deutlich erhöhte Elastizität resultieren.

Ein weiterer bevorzugter Mörtel der vorliegenden Erfindung weist ein Verhältnis Zuschlagstoffe/Bindemittel von 1:0,2 bis 1 :5 und ein Verhältnis Bindemittel/Wasser von 0,3:1 bis 2,5:1 auf und ist dadurch besonders gut geeignet für die Herstellung einer Metall-, z.B. Zink-Anode, d.h. beispielsweise zum Einbetten eines Zinkgitters, Zinknetzes, Zinklochblechs oder von Zinkdrähten. Ein solcher bevorzugter Mörtel eignet sich insbesondere für die Herstellung von aktiven und vor allem dauerhaft aktiven Zinkanoden, da die Zinkanode auch bei den herrschenden, relativen niedrigen pH-Werten (d.h. pH < 12, vorzugsweise pH < 11) aktiv bleibt. Üblicherweise bleibt eine Zinkanode nur bei pH-Werten von > 13, vorzugsweise > 14, aktiv. Großer Vorteil des Bindemittels und des daraus hergestellten Mörtels ist, dass die Zinkanode auch nach einer durch Austrocknung bedingten Phase der Inaktivität nach einer Wiederbefeuchtung sofort aktiv wird. Dadurch wird die Nutzungsdauer der Zinkanode verlängert, da während Trockenphasen (r.F. < 60%) der zu schützende Stahl nicht korrodiert und somit die Zinkanode nicht benötigt wird. Bei erneutem Feuchtezutritt wird die Zinkanode wieder aktiv, das heisst, sie ist nur aktiv, wenn sie wirklich gebraucht wird.

In einem weiteren Aspekt stellt die Erfindung einen Betonkleber bereit, der unter Verwendung eines hydraulischen Bindemittels, einer Bindemittelmatrix oder eines Mörtels hergestellt wurde. Aufgrund seiner hohen Ionenleitfähigkeit eignet sich der Betonkleber besonders gut zum Aufkleben von Platten, Kacheln, Metallteilen, Beton und Mörtelfertigteilen auf Betonflächen, z.B. von plattenformigen Metallanoden auf Beton.

Die Erfindung bezieht sich auf die Verwendung eines hydraulischen Bindemittels, einer Bindemittelmatrix oder eines Mörtels zur Herstellung von Metallanoden, d.h. Opferanoden, für den galvanischen Korrosionsschutz von Stahl, vorzugsweise von Stahl in Stahlbeton.

Dazu wird vorzugsweise in das hydraulische Bindemittel, die Bindemittelmatrix bzw. den Mörtel ein Metall, das in der elektrochemischen Spannungsreihe ein negativeres Standardpotential als Eisen aufweist, oder eine Legierung, die im Wesentlichen aus einem oder mehreren Elementen besteht, das/die ein negativeres Standardpotential als Eisen aufweist/aufweisen, eingebettet. Das Metall bzw. Element ist dabei besonders bevorzugt Zink, und das Metall oder die Legierung wird vorzugsweise in Form eines Gitters, Netzes, Lochblechs oder von Drähten eingebettet. Die Anode selbst kann beispielsweise in Platten-, Würfel-, Zylinder- oder Gitterform, vorzugsweise in Plattenform, vorliegen, und sie kann auf eine Betonfläche aufgebracht, vorzugsweise aufgeklebt, oder in den Beton eingebettet werden.

Die erfindungsgemäße Metall-, insbesondere Zink-Anode unterscheidet sich durch die oben beschriebenen Eigenschaften des Bindemittels deutlich von Zinkanoden nach dem Stand der Technik, vor allem durch die hohe Festigkeit (ca. 15-25 MPa Druckfestigkeit), hohe Elastizität (E-Modul < 15 GPa, vorzugsweise < 10 GPa), hohe Kriechzahl (> 0,25 mm/m) und hohe Ionenleitfähigkeit. Eine erfindungsgemäße Anode zeichnet sich weiter dadurch aus, dass sie in Fliesen- oder Plattenform hergestellt werden kann und mit einem geeigneten Kleber, vorzugsweise mit dem Betonkleber, auf die zu schützenden Bauteile aufgeklebt werden kann oder als "diskrete Zinkanode" in den zu schützenden Betonbauteil eingesetzt werden kann. Eine erfindungsgemäße Zinkanode kann auch "in situ" auf dem zu schützenden Bauteil hergestellt werden, indem das metallische Zink auf dem zu schützenden Bauteil in das Bindemittel eingebettet wird und auf dem Bauteil zur/zum Bindemittelmatrix bzw. Mörtel erhärtet.

Darüber hinaus erfordert eine Zinkanode gemäß dem Stand der Technik, um eine Passivierung zu verhindern, eine hohe Alkalinität des Bindemittels, wie dies beispielsweise in US-A-6.572.760 (B2) beschrieben wird, wo ein pH von über 12, vorzugsweise über 14, beschrieben wird.

Überraschenderweise eignet sich nun das Bindemittel, insbesondere wenn es ein geeignetes Zink komplexierendes Mittel, wie z.B. ein Polyethylenimin, enthält, für die Aktivierung von Zinkanoden, obwohl der pH-Wert des Bindemittels, wie eingangs erwähnt, nur ca. 10,5 beträgt. Die Anoden bleiben auch nach längerem Betrieb (mehrere Jahre) aktiv und werden auch nach Trockenperioden wieder aktiviert. Die Aktivität kann durch Zugabe von LiCl noch deutlich erhöht werden. Versuche zeigten, dass Zinkanoden in Portlandzementbeton oder Mörtel, auch in stark alkalischem Portlandzement oder in mit Alkalien versetztem Portlandzement, nach einem Trocken-Feucht-Wechsel deutlich an Aktivität verlieren. Die Bindemittelmatrix eignet sich daher insbesondere auch für die Herstellung von "Einzelanoden", im Angelsächsischen als "diskrete Anoden" bezeichnet, wie z.B. ebenfalls in US-A-6.572.760 (B2) beschrieben wird.

Um die dauerhafte Funktion der erfindungsgemäßen Zinkanode zu gewährleisten, hat sich die Zugabe von latent hydraulischen Alumosilikaten als besonders wirksam und vorteilhaft erwiesen. Die Zinkanode reagiert empfindlich auf gelöste Calciumionen, die vom latent hydraulischen Alumosilikatglas während der Hydratation freigesetzt werden können. Gelöste Calciumionen bewirken eine Passivierung des Zinks und vermindern somit die Wirksamkeit des galvanischen Korrosionsschutzes. Langfristig kann dies zu einer fast vollständigen Unwirksamkeit einer galvanischen Zinkanode führen. Mittels latent hydraulischer Alumosilikatzusätze kann das gelöste Calcium in der Bindemittelmatrix dauerhaft gebunden werden und somit die Funktionsweise der Zinkanode dauerhaft gewährleistet werden.

Voraussetzung für die dauerhafte Wirksamkeit von galvanischen Zinkanoden ist eine Einbettmatrix, die im Wesentlichen frei von gelöstem Calcium ist oder nur Spuren von gelöstem Calcium enthält. In der Bindemittelmatrix kann durch Beimischen von latent hydraulischen Alumosilikaten gegebenenfalls gelöstes Calcium gebunden werden. Im Unterschied zu calciumfreien hydraulischen Bindemitteln können mit dem calciumhaltigen Bindemittel hohe Festigkeiten, hohe Abrissfestigkeiten und eine hohe Elastizität erreicht werden. Dies ist eine wesentliche Voraussetzung für die Herstellung der erfindungsgemäßen Zinkanoden. Die hohen Festigkeiten sind auf die Einbindung des Calciums in die Bindemittelmatrix zurückzuführen.

Eine bevorzugte Variante der Herstellung einer galvanischen Zinkanode gemäß vorliegender Erfindung besteht darin, dass in eine vorgefertigte Schalung, z. b. 50 x 100 cm und 1 cm tief, ein Mörtel bis zu einer Höhe von 0,5 cm eingefüllt wird, in diese Mörtelschicht wird ein Zinkgitter, versehen mit elektrischen Anschlüssen, eingelegt und mit Mörtel überdeckt und so in den Mörtel eingebettet. Die so hergestellte plattenförmige Zinkanode wird dann mit einem geeigneten Betonkleber, vorzugsweise einem Betonkleber, auf die Oberfläche des zu vor Stahlkorrosion zu schützenden Bauteil aufgeklebt. Nach dem Aushärten des Klebers werden die einzelnen Zinkanodenplatten über die elektrischen Anschlüsse miteinander und vorzugsweise je zweimal pro Bauteil mit der Stahlbewehrung verbunden.

Die galvanische Zinkanode kann aber auch direkt auf dem zu schützenden Betonbauteil hergestellt werden, indem eine dünne Mörtelschicht auf die Betonoberfläche aufgetragen wird. Auf dieser Mörtelschicht wird z.B. ein Zinkgitter angebracht und in eine zweite Lage des Mörtels eingebettet.

Das Aufbringen des Zinkgitters und Einbetten in eine Mörtelschicht auf dem Beton hat sich freilich als aufwändig erwiesen, vor allem das Fixieren des Zinkgitters mittels in Bohrlöchern eingesetzter Kunststoffdübel und das Verlöten der Gitter untereinander sowie die Herstellung der Verbindung zur Stahlbewehrung. Im Vergleich dazu ist das Aufkleben von plattenförmigen galvanischen Zinkanoden auf Beton sehr viel einfacher und rascher zu bewerkstelligen. Der große Vorteil der plattenförmigen Zinkanoden ist jener, dass sie anwendungsgerecht in der Werkhalle vorfabriziert und dann auf der Bausteile rasch montiert werden können, d.h. analog zu Betonfertigteilen. Bei kompliziert strukturierten Betonoberflächen, z.B. mit Vorsprüngen etc., kann die In-situ-Herstellung der galvanischen Zinkanode einfacher und kostengünstiger sein.

Eine Ausführungsform einer erfindungsgemäßen galvanischen Zinkanode Anode, die sich zur Einbettung im zu schützenden Betonbauteil eignet. Diese Ausführungsform kann beispielsweise im Rahmen von Betonreparaturmaßnahmen in bestehende Betonbauteile eingebettet werden, um eine weitere Korrosion der Stahlbewehrung im Grenzbereich zum sanierten Beton langfristig zu verhindern. Für diese Anwendung haben sich prismenförmige und zylinderförmige galvanische Zinkanoden als besonders gut geeignet erwiesen. Die galvanische Zinkanode kann jedoch auch als diskrete Anode in Bohrlöchern im Betonbauteil mit einem geeigneten Ankermörtel, vorzugsweise jedoch mit einem Betonkleber, fixiert werden. Für diese Anwendung haben sich wiederum zylinderförmige galvanische Zinkanoden als besonders gut geeignet erwiesen.

Versuche mit einer in das hydraulische Bindemittel eingebetteten und auf einer Betonoberfläche angebrachten Zinkanode zeigten, dass unter der Voraussetzung, das kein frisches Wasser zutreten kann (z.B. durch Versiegelung der Oberfläche mit einem geeigneten Material, z.B. Epoxidharz, PU, PE-Folie etc.), während des Betriebs der galvanischen Anode Chlorid aus der Betonüberdeckung galvanisch entzogen wird und im Festelektrolyt chemisch gebunden und vollständig immobilisiert wird. Rasterelektronenmikroskopische Untersuchengen ergaben, dass das Chlorid als Zinkhydroxochlorid an das während des galvanischen Betriebes gebildete Zinkhydroxid gebunden wird und damit vollständig immobilisiert wird. Mit 1 kg Zink/m$^2$ können 0,56 kg Chlorid oder ein Äquivalent von 5,65 Gew.-%/Zementgewicht in 3 cm Betonüberdeckung gebunden werden. Dies bedeutet, dass über einen längeren Zeitraum, z.B. von ca. 2 bis 5 Jahren, Chlorid vollständig aus dem Beton entzogen werden kann. Wenn ein erneuter Zutritt von Chlorid verhindert wird, so kann ein solches galvanisches Schutzsystem nach ca. 5 Jahren abgeschaltet werden bzw. braucht nach Ablauf seiner Aktivzeit, die üblicherweise ca. 10 bis 15 Jahre beträgt, nicht erneuert zu werden.

Die gemäß vorliegender Erfindung hergestellte galvanische Metall-, insbesondere Zink-Anode eignet sich somit besonders gut für den präventiven Korrosionsschutz von Stahl in Beton, wozu sie vorzugsweise während der Herstellung der Betonbauteile in den Frischbeton eingebettet wird. Bevorzugt wird die galvanische Anode auf der Stahlbewehrung fixiert, mit dieser elektrisch verbunden und mit der Stahlbewehrung in den Frischbeton eingebettet. In einem letzten Aspekt umfasst die vorliegende Erfindung daher die Verwendung einer solchen Opferanode zum Korrosionsschutz von Stahl, insbesondere von Stahl in Stahlbeton.

Nachstehend wird die Erfindung anhand von nichteinschränkenden Beispielen näher beschrieben.

BEISPIELE

Beispiel 1

### Komponente A

| | | |
|---|---|---|
| 14 | Gewichtsteile | Wasser |
| 17 | Gewichtsteile | Hochofenschlacke |
| 10 | Gewichtsteile | Metakaolin |
| 0,1 | Gewichtsteile | Celluloseether |
| 0,1 | Gewichtsteile | Entschäumer |
| 60 | Gewichtsteile | Kalksteinmehl 0,2-1,0 mm |

### Komponente B

| | | |
|---|---|---|
| 30 | Gewichtsteile | Kaliwasserglas |
| 2 | Gewichtsteile | Kaliumhydroxid |

Die Komponenten A und B wurden jeweils durch Vermischen der Inhaltsstoffe als wässrige Suspension (Komponente A) und als klare Lösung (Komponente B) hergestellt. Das Bindemittel wurde durch Zumischen der Komponente B zur Komponente A hergestellt. Es wurde damit eine Standardbetonplatte (40 x 40 x 4 cm) beschichtet. Die Masse erhärtete nach 30 Minuten. Nach 24 Stunden wurde eine Abrissfestigkeit von 2 MPa, nach 14 Tagen von 2,8 MPa gemessen. Die 28-Tage-Druckfestigkeit betrug 16 MPa und der statische E-Modul 10 GPa. Die Kriechzahl, bestimmt nach 90 Tagen, betrug 0,54 mm/m.

Die Hochofenschlacke wies folgende Zusammensetzung auf:

| | | |
|---|---|---|
| 39 | Gewichtsteile | $SiO_2$ |
| 6,9 | Gewichtsteile | $Al_2O_3$ |
| 41 | Gewichtsteile | $CaO$ |
| 0,4 | Gewichtsteile | $K_2O$ |

Beispiel 2

### Komponente A

| | | |
|---|---|---|
| 7 | Gewichtsteile | Wasser |
| 15 | Gewichtsteile | Hochofenschlacke |
| 12 | Gewichtsteile | Metakaolin |
| 8 | Gewichtsteile | Copolymer aus Butylacrylat und Styrol, 50%ige wässrige Dispersion |
| 0,2 | Gewichtsteile | Zinksulfat-heptahydrat |
| 0,1 | Gewichtsteile | Celluloseether |
| 0,1 | Gewichtsteile | Entschäumer |

(fortgesetzt)

| 55 | Gewichtsteile | Kalksteinmehl 0,2-1,0 mm |
|---|---|---|

| | Komponente B | |
|---|---|---|
| 25 | Gewichtsteile | Kaliwasserglas |
| 3 | Gewichtsteile | Kaliumhydroxid |

Die Komponenten A und B wurden jeweils durch Vermischen der Inhaltsstoffe als wässrige Suspension (Komponente A) und als klare Lösung (Komponente B) hergestellt. Das Bindemittel wurde durch Zumischen der Komponente B zur Komponente A hergestellt. Es wurde damit eine Standardbetonplatte (40 x 40 x 4 cm) beschichtet. Die Masse erhärtete nach 2 Stunden. Nach 24 Stunden wurde eine Abrissfestigkeit von 1,7 MPa, nach 14 Tagen von 2,6 MPa gemessen. Die 28-Tage-Druckfestigkeit betrug 18 MPa und der E-Modul 5 GPa. Die Kriechzahl, bestimmt nach 90 Tagen, betrug 0,35 mm/m.

Beispiel 3

| | Komponente A | |
|---|---|---|
| 8 | Gewichtsteile | Wasser |
| 18 | Gewichtsteile | Hochofenschlacke |
| 10 | Gewichtsteile | Metakaolin |
| 12 | Gewichtsteile | Copolymer aus Butylacrylat und Styrol, 50%ige wässrige Dispersion |
| 0,1 | Gewichtsteile | Celluloseether |
| 0,1 | Gewichtsteile | Entschäumer |
| 55 | Gewichtsteile | Kalksteinmehl 0,1-0,3 mm |

| | Komponente B | |
|---|---|---|
| 28 | Gewichtsteile | Kaliwasserglas |
| 2 | Gewichtsteile | Kaliumhydroxid |

Die Komponenten A und B wurden jeweils durch Vermischen der Inhaltsstoffe als wässrige Suspension (Komponente A) und als klare Lösung (Komponente B) hergestellt. Das Bindemittel wurde durch Zumischen der Komponente B zur Komponente A hergestellt. Das so hergestellte Bindemittel eignete sich besonders gut als Betonkleber und Fliesenkleber. Aufgetragen auf Beton betrugen die Abrissfestigkeiten nach 24 Stunden 2 MPa und nach 28 Tagen 3 MPa.

Beispiel 4

| | Komponente A | |
|---|---|---|
| 8 | Gewichtsteile | Wasser |
| 12 | Gewichtsteile | Hochofenschlacke |
| 16 | Gewichtsteile | Metakaolin |
| 10 | Gewichtsteile | Copolymer aus Butylacrylat und Styrol, 50%ige wässrige Dispersion |
| 0,5 | Gewichtsteile | Zinksulfat-heptahydrat |
| 0,1 | Gewichtsteile | Celluloseether |
| 0,1 | Gewichtsteile | Entschäumer |
| 2 | Gewichtsteile | Lithiumchlorid |
| 4 | Gewichtsteile | Polyethylenimine |
| 55 | Gewichtsteile | Kalksteinmehl 0,2-1,0 mm |

|    | Komponente B |    |
|----|--------------|----|
| 25 | Gewichtsteile | Kaliwasserglas |
| 3  | Gewichtsteile | Kaliumhydroxid |

Die Komponenten A und B wurden jeweils durch Vermischen der Inhaltsstoffe als wässrige Suspension (Komponente A) und als klare Lösung (Komponente B) hergestellt. Das Bindemittel wurde durch Zumischen der Komponente B zur Komponente A hergestellt. In eine Schalungsform aus Holz (30 x 30 x 2 cm) wurde der Mörtel bis auf eine Höhe von 0,75 cm eingebracht, ein Zinkgitter (Maschenweite 3 cm, Drahtstärke 1,1 mm) eingelegt und die Form dann mit dem Mörtel aufgefüllt.

Die Zinkanode wurde dann auf eine mit Stahl bewehrte Betonplatte (40 x 40 x 4 cm, 6 mm Stahl, E 10) mit dem Betonkleber aus Beispiel 3 geklebt und in einem klimatisierten Raum bei 20 °C und 75 % r.F. gelagert. Nach dem Aushärten des Klebers wurde die Zinkanode mit dem Bewehrungstahl verbunden. Es wurde ein galvanischer Anfangsstrom von 50 mA/m$^2$ gemessen, der über ca. 8 Wochen auf ca. 8 mA/m$^2$ abnahm und für mindestens 6 Monate stabil (5 bis 8 mA/m$^2$) blieb.

Beispiel 5

|      | Komponente A |    |
|------|--------------|----|
| 12   | Gewichtsteile | Wasser |
| 34   | Gewichtsteile | Schmelzkammerflugasche (verglast) |
| 15   | Gewichtsteile | Puzzolan |
| 8,6  | Gewichtsteile | Polyethylacrylat, 50%ige wässrige Dispersion |
| 0,86 | Gewichtsteile | Zinksulfat-heptahydrat |
| 0,19 | Gewichtsteile | Cellulosemethylether |
| 0,2  | Gewichtsteile | Entschäumer |
| 0,9  | Gewichtsteile | Lithiumchlorid |
| 1,7  | Gewichtsteile | Polyethylenimin |

|    | Komponente B |    |
|----|--------------|----|
| 50 | Gewichtsteile | Kaliwasserglas |
| 5  | Gewichtsteile | Kaliumhydroxid |

|    | Komponente C |    |
|----|--------------|----|
| 80 | Gewichtsteile | Quarzsand 0,2-0,5 mm |

Die Schmelzkammerflugasche wies folgende Zusammensetzung auf:

|    |   |   |
|----|---|---|
| 52 | Gewichtsteile | $SiO_2$ |
| 12 | Gewichtsteile | $Al_2O_3$ |
| 16 | Gewichtsteile | CaO |
| 0,6 | Gewichtsteile | $K_2O$ |

Der Puzzolan wies folgende Zusammensetzung auf:

|    |   |   |
|----|---|---|
| 65 | Gewichtsteile | $SiO_2$ |
| 30 | Gewichtsteile | $Al_2O_3$ |
| 5  | Gewichtsteile | CaO |

Die Komponenten A und B wurden jeweils durch Vermischen der Inhaltsstoffe als wässrige Suspension (Komponente A) und als klare Lösung (Komponente B) hergestellt. Das Bindemittel wurde durch Zumischen der Komponente B zur Komponente A und dann durch Zumischen der Komponente C hergestellt. In eine zylindrische Schalungsform aus Kunststoff (Durchmesser 9,4 cm, Höhe 12 cm) wurde ein spiralförmig aufgerolltes Zinkgitter (Gesamtgewicht 170 g) im Zentrum des Zylinders fixiert. Am Zinkgitter wurde ein isolierter Kupferdraht (Querschnitt 2,5 mm$^2$) angelötet. Der Mörtel wurde auf einem Vibriertisch in die Form eingebracht und die Form randvoll gefüllt. Die Form wurde bei 25°C gelagert, nach 48 Stunden wurde ausgeschalt und die Form weitere 5 Tage lang bei 99 % r.F. gelagert.

Die derart hergestellte Zinkeinzelanode wurde dann in ein 10 cm weites und 20 cm tiefes Bohrloch, gefüllt mit dem Betonkleber aus Beispiel 3, in eine mit Stahl bewehrte Betonplatte (30 x 30 x 20 cm, 6 mm Stahl, E 10) eingesetzt. Nach dem Aushärten des Klebers wurde der Kupferdraht über ein Messgerät, mit dem der Strom widerstandsfrei gemessen werden kann, mit dem Bewehrungstahl verbunden. Es wurde ein galvanischer Anfangsstrom von 8 mA gemessen, der über ca. 8 Wochen auf ca. 1,2 mA abnahm und für mindestens 6 Monate stabil (0,5 bis 0,8 mA) blieb. Auch nach mehreren Trocken/Feucht-Zyklen wurde nach der erneuten Feuchtlagerung ein galvanischer Strom von 0,6 bis 0,9 mA gemessen.

Beispiel 6

|  |  | Komponente A |
|---|---|---|
| 18 | Gewichtsteile | Wasser |
| 2 | Gewichtsteile | Wasserstoffperoxid 35% |
| 42 | Gewichtsteile | Hochofenschlacke aus Beispiel 1 |
| 10 | Gewichtsteile | Verglaste Steinkohleflugasche |
| 5 | Gewichtsteile | Polyhexylacrylat 50%ige wässrige Dispersion |
| 2 | Gewichtsteile | Zinksulfat-heptahydrat |
| 0,01 | Gewichtsteile | Stärkeäther |
| 0,15 | Gewichtsteile | Entschäumer |
| 0,5 | Gewichtsteile | Lithiumchlorid |
| 2,1 | Gewichtsteile | Polyethylenimin |

|  |  | Komponente B |
|---|---|---|
| 47 | Gewichtsteile | Kaliwasserglas |
| 1 | Gewichtsteile | Kaliumhydroxid |

|  |  | Komponente C |
|---|---|---|
| 65 | Gewichtsteile | Quarzsand 0,2-0,5 mm |

Die verglaste Steinkohleflugasche wies folgende Zusammensetzung auf:

| 55 | Gewichtsteile | $SiO_2$ |
|---|---|---|
| 23 | Gewichtsteile | $Al_2O_3$ |
| 8 | Gewichtsteile | $CaO$ |
| 0,6 | Gewichtsteile | $K_2O$ |

Die Komponenten A und B wurden jeweils durch Vermischen der Inhaltsstoffe als wässrige Suspension (Komponente A) und als klare Lösung (Komponente B) hergestellt. Das Bindemittel wurde durch Zumischen der Komponente B zur Komponente A und dann durch Zumischen der Komponente C hergestellt. In eine zylindrische Schalungsform aus Kunststoffe (Durchmesser 9,4, Höhe 12 cm) wurde ein spiralförmig aufgerolltes gelochtes Blech aus einer Zinklegierung (70% Zn, 30% Al) (Gesamtgewicht 140 g) im Zentrum des Zylinders fixiert. Am Zinkgitter wurde ein isolierter Kupferdraht (Querschnitt 2,5 mm$^2$) angelötet. Der Mörtel wurde auf einem Vibriertisch in die Form eingebracht und die Form randvoll gefüllt. Die Form wurde bei 25 °C gelagert, nach 48 Stunden wurde ausgeschalt und die Form weitere 5 Tage lang bei 99 % r.F. gelagert.

Die derart hergestellte Zinkeinzelanode wurde dann in ein 10 cm weites und 20 cm tiefes Bohrloch, gefüllt mit dem Betonkleber aus Beispiel 3, in eine mit Stahl bewehrte Betonplatte (30 x 30 x 20 cm, 6 mm Stahl, E 10) eingesetzt. Nach dem Aushärten des Klebers wurde der Kupferdraht über ein Messgerät, mit dem der Strom widerstandsfrei gemessen werden kann, mit dem Bewehrungstahl verbunden. Es wurde ein galvanischer Anfangsstrom von 9 mA gemessen, der über ca. 8 Wochen auf ca. 1 mA abnahm und für mindestens 6 Monate stabil (0,5 bis 1,0 mA) blieb. Auch nach mehreren Trocken/Feucht-Zyklen wurde nach der erneuten Feuchtlagerung ein galvanischer Strom von 0,8 bis 1,5 mA gemessen.

**Patentansprüche**

1. Galvanische Metallanode, umfassend zumindest ein Metall oder zumindest eine Metalllegierung, eingebettet in ein hydraulisches Bindemittel,

   wobei das hydraulische Bindemittel K, Ca, Alumosilikate, gegebenenfalls Li, Na, und Mg, sowie die folgenden Komponenten umfasst:

   a) latent hydraulisches Alumosilikatglas mit einem Verhältnis

   $$(CaO+MgO+Al_2O_3)/SiO_2 > 1$$

   und

   b) Alkaliaktivator in Form von Alkaliwasserglas der Summenformel (I)

   $$a(M_2O) *_x(SiO_2) *_y(H_2O) \qquad (I)$$

   wobei M = Li, Na, K, a = 0-4 sowie x = 0-5 und y = 3-20 bedeuten,
   wobei das Molverhältnis von Ca/Si < 1 , das Molverhältnis von Al/Si < 1 und das Molverhältnis von M/Si > 0,1 ist.

2. Galvanische Metallanode gemäß Anspruch 1, **dadurch gekennzeichnet, dass** der Alkaliaktivator mindestens ein Alkalihydroxid umfasst.

3. Galvanische Metallanode nach Anspruch 1 oder 2, **dadurch gekennzeichnet, dass** das hydraulisches Bindemittel als weitere Komponente c) ein latent hydraulisches Zusatzmittel umfasst, das in der Lage ist, Calciumionen zu binden.

4. Galvanische Metallanode nach Anspruch 3, **dadurch gekennzeichnet, dass** Komponente c) ein calciumarmes, latent hydraulisches Alumosilikat mit einem CaO- Gehalt von < 15 Gew.-% ist und insbesondere aus einem natürlichen Puzzolan, wie z.B. Vulkanasche oder gemahlenem Tuffgestein, bevorzugt aus einem thermisch aktivierten, zwischen 500 °C und 900 °C calcinierten Tonmineral besteht.

5. Galvanische Metallanode nach einem der vorangegangenen Ansprüche, **dadurch gekennzeichnet, dass** das hydraulisches Bindemittel die Komponenten a), b) und gegebenenfalls c) in folgenden Mengen umfasst: a) 100-300 Gewichtsteile latent hydraulisches Alumosilikatglas; b) 20-150 Gewichtsteile Alkaliaktivator; c) gegebenenfalls 50-200 Gewichtsteile latent hydraulisches Zusatzmittel; wobei das Molverhältnis von Al/Si < 0,8 und das Molverhältnis von Ca/Si < 0,9 ist.

6. Galvanische Metallanode nach einem der vorangegangenen Ansprüche, **dadurch gekennzeichnet, dass** das hydraulisches Bindemittel des Weiteren zumindest ein organisches Polymer enthält ausgewählt aus Polyacrylaten, Latex, Polyacryl-Copolymeren, Polystyrol-Copolymeren und Polystyrolbutadienen.

7. Galvanische Metallanode nach einem der vorangegangenen Ansprüche, **dadurch gekennzeichnet, dass** das hydraulisches Bindemittel des Weiteren ein lösliches Zinksalz, vorzugsweise ein Zinksulfathydrat und/oder ein Lithiumsalz, vorzugsweise Lithiumchlorid, und/oder das hydraulisches Bindemittel des Weiteren ein Zink komplexierendes Mittel, vorzugweise ein Polyethylenimin oder Polyamid, und/oder dass das hydraulisches Bindemittel des Weiteren ein Verdickungsmittel und/oder ein Thixotropiermittel, vorzugsweise einen Cellulosealkylether und/oder einen Stärkealkylether, umfasst.

8. Galvanische Metallanode nach einem der vorangegangenen Ansprüche, **dadurch gekennzeichnet, dass** das latent hydraulische Alumosilikatglas mit Wasserstoffperoxid vermischt ist.

9. Galvanische Metallanode nach einem der vorangegangenen Ansprüche, **dadurch gekennzeichnet, dass** das hydraulisches Bindemittel als Zweikomponentensystem vorliegt, wobei der Alkaliaktivator in Wasser gelöst ist und der Gehalt an Alkaliaktivator und gegebenenfalls enthaltenen Alkalihydroxiden zwischen 10 und 50 Gew.-% beträgt.

10. Galvanische Metallanode nach einem der vorangegangenen Ansprüche, **dadurch gekennzeichnet, dass** das hydraulisches Bindemittel mit Wasser, bevorzugt in einem Verhältnis von 1 :0,5 bis 1:4, bezogen auf die Trockensubstanz des Bindemittels, zu einer Bindemittelmatrix umgesetzt wird.

11. Galvanische Metallanode nach Anspruch 10, wobei die Bindemittelmatrix durch ein Verhältnis von $CaO/(SiO_2+Al_2O_3)$ von < 0,9, vorzugsweise < 0,5, ein verhältnis von $CaO/SiO_2$ von < 0,9, vorzugsweise < 0,5, und ein Verhältnis von $M_2O/(SiO_2+Al_2O_3)$ von > 0,01, vorzugsweise > 0,05, gekennzeichnet ist.

12. Galvanische Metallanode nach Anspruch 11, wobei die Bindemittelmatrix durch eine Verhältnis von $CaO/(SiO_2+Al_2O_3)$ von < 0,5, vorzugsweise < 0,3, ein Verhältnis von $CaO/SiO_2$ von < 0,8, vorzugsweise < 0,5, und ein Verhältnis von $M_2O/(SiO_2+Al_2O_3)$ von > 0,02, vorzugsweise > 0,07, gekennzeichnet ist.

13. Galvanische Metallanode nach einem der Ansprüche 1-12, **dadurch gekennzeichnet, dass** das hydraulisches Bindemittel mit Wasser und Zuschlagstoffen, umgesetzt wird, bevorzugt **gekennzeichnet durch** ein Verhältnis Zuschlagstoffe/Bindemittel von 1 :0,25 bis 1 :4 und ein Verhältnis Bindemittel/Wasser von 0,25:1 bis 2:1, besonders bevorzugt **durch** ein Verhältnis Zuschlagstoffe/Bindemittel von 1 :0,2 bis 1 :5 und ein Verhältnis Bindemittel/Wasser von 0,3:1 bis 2,5:1.

14. Galvanische Metallanode nach einem der vorangegangenen Ansprüche, **dadurch gekennzeichnet, dass** sie in Form eines Gitters, Netzes, Lochblechs oder in Drahtform vorliegt und/oder dass das Metall Zink ist.

15. Galvanische Metallanode nach einem der vorangegangenen Ansprüche, **dadurch gekennzeichnet, dass** sie in Platten-, Würfel-, Zylinderoder Gitterform, vorzugsweise in Plattenform, vorliegt.

16. Verwendung einer galvanischen Metallanode nach einem der vorangegangenen Ansprüche zum Korrosionsschutz von Stahl, insbesondere von Stahl in Stahlbeton.

17. Verwendung eines hydraulischen Bindemittels zur Herstellung von Metallanoden für den galvanischen Korrosionsschutz von Stahl, vorzugsweise von Stahl in Stahlbeton, wobei das hydraulische Bindemittel K, Ca, Alumosilikate, gegebenenfalls Li, Na, und Mg, sowie die folgenden Komponenten umfasst:

   a) latent hydraulisches Alumosilikatglas mit einem Verhältnis

$$(CaO+MgO+Al2O3)/SiO2 > 1$$

   und
   b) Alkaliaktivator in Form von Alkaliwasserglas der Summenformel (I)

$$a(M2O)* x(SiO2)* y(H2O) \qquad (I)$$

   wobei M = Li, Na, K; a = 0-4; x = 0-5; und y = 3-20 bedeuten,
   wobei das Molverhältnis Ca/Si < 1, das Molverhältnis Al/Si < 1 und das Molverhältnis M/Si > 0,1 sind.

## Claims

1. A galvanic metal anode comprising at least one metal or at least one metal alloy, embedded in a hydraulic binder, wherein the hydraulic binder comprises K, Ca, aluminosilicates, optionally Li, Na, and Mg, as well as the following components:

   a) a latently-hydraulic aluminosilicate glass having a ratio of

$$(CaO+MgO+Al_2O_3)/SiO_2 > 1$$

and
b) an alkali activator in the form of alkali water glass of the molecular formula (I)

$$a(M_2O)* x(SiO_2)* y(H_2O) \qquad (I)$$

wherein M = Li, Na, K, a = 0-4 as well as x = 0-5 and y = 3-20,
wherein the molar ratio of Ca/Si is < 1, the molar ratio of Al/Si is < 1 and the molar ratio of M/Si is > 0.1.

2. The galvanic metal anode according to claim 1, **characterized in that** the alkali activator comprises at least one alkali hydroxide.

3. The galvanic metal anode according to claim 1 or 2, **characterized in that** the hydraulic binder comprises, as a further component c), a latently-hydraulic additive which is able to bind calcium ions.

4. The galvanic metal anode according to claim 3, **characterized in that** component c) is a low-calcium latently-hydraulic aluminosilicate having a CaO content of < 15 % by weight and especially consists of a natural puzzolane, such as volcanic ash or pulverized volcanic tuff, preferably of a thermally activated clay mineral calcinated between 500°C and 900°C.

5. The galvanic metal anode according to one of the preceding claims, **characterized in that** the hydraulic binder comprises the components a), b) and optionally c) in the following amounts. a) 100-300 parts by weight of a latently-hydraulic aluminosilicate glass; b) 20-150 parts by weight of alkali activator; c) optionally 50-200 parts by weight of latently-hydraulic additive; wherein the molar ratio of Al/Si is < 0.8 and the molar ratio of Ca/Si is < 0.9.

6. The galvanic metal anode according to one of the preceding claims, **characterized in that** the hydraulic binder furthermore contains at least one organic polymer, selected from polyacrylates, latex, polyacryl copolymers, polystyrene copolymers and polystyrene butadienes.

7. The galvanic metal anode according to one of the preceding claims, **characterized in that** the hydraulic binder furthermore comprises a soluble zinc salt, preferably a zinc sulfate hydrate and/or a lithium salt, preferably lithium chloride, and/or the hydraulic binder furthermore comprises a zinc-complexing agent, preferably a polyethylene imine or polyamide, and/or **in that** the hydraulic binder furthermore comprises a thickening agent and/or a thixotroping agent, preferably a cellulose alkyl ether and/or a starch alkyl ether.

8. The galvanic metal anode according to one of the preceding claims, **characterized in that** the latently-hydraulic aluminosilicate glass is mixed with hydrogen peroxide.

9. The galvanic metal anode according to one of the preceding claims, **characterized in that** the hydraulic binder is present as a two-component system, wherein the alkali activator is dissolved in water and the content of alkali activator and alkali hydroxides optionally contained therein is between 10 and 50 % by weight.

10. The galvanic metal anode according to one of the preceding claims, **characterized in that** the hydraulic binder is reacted with water to a binder matrix, preferably in a proportion of 1:0.5 to 1:4, based on to the dry substance of the binder.

11. The galvanic metal anode according to claim 10, wherein the binder matrix is **characterized by** a ratio of $CaO/(SiO_2 + Al_2O_3) < 0.9$, preferably 0.5, a ratio of $CaO/SiO_2 < 0.9$, preferably < 0.5, and a ratio of $M_2O/(SiO_2 + Al_2O_3) > 0.01$, preferably > 0.07.

12. The galvanic metal anode according to claim 11, wherein the binder matrix is **characterized by** a ratio of $CaO/(SiO_2 + Al_2O_3) < 0.5$, preferably 0.3, a ratio of $CaO/SiO_2 < 0.8$, preferably < 0.5, and a ratio of $M_2O/(SiO_2 + Al_2O_3) > 0.02$, preferably > 0.07.

13. The galvanic metal anode according to one of the claims 1-12, **characterized in that** the hydraulic binder is reacted with water and aggregates, preferably **characterized by** a ratio of aggregates/binder of 1:0.25 to 1:4, and a ratio of binder/water of 0.25:1 to 2:1, especially preferably by a ratio of aggregates/binder of 1:0.2 to 1:5, and a ratio of binder/water of 0.3:1 to 2.5:1.

14. The galvanic metal anode according to one of the preceding claims, **characterized in that** it is in the shape of a grid, net, punched plate or wire and/or **in that** the metal is zinc.

15. The galvanic metal anode according to one of the preceding claims, **characterized in that** it is plate-shaped, cube-shaped, cylinder-shaped or grid-shaped, preferably plate-shaped.

16. Use of a galvanic metal anode according to one of the preceding claims for protecting steel against corrosion, especially steel in reinforced concrete.

17. Use of a hydraulic binder for the manufacture of metal anodes for galvanic corrosion protection of steel, preferably steel in reinforced concrete, wherein the hydraulic binder comprises K, Ca, aluminosilicates, optionally Li, Na, and Mg, as well as the following components:

   a) a latently-hydraulic aluminosilicate glass having a ratio of

$$(CaO+MgO+Al_2O_3)/SiO_2 > 1$$

   and
   b) an alkali activator in the form of alkali water glass of the molecular formula (I)

$$a(M_2O)* x(SiO_2)* y(H_2O) \qquad (I)$$

   wherein M = Li, Na, K, a = 0-4 as well as x = 0-5 and y = 3-20,
   wherein the molar ratio of Ca/Si is < 1, the molar ratio of Al/Si is < 1 and the molar ratio of M/Si is > 0.1.

## Revendications

1. Anode métallique galvanique comprenant au moins un métal ou au moins une alliage métallique, encastrée dans un liant hydraulique,
   dans laquelle le liant hydraulique comprend K, Ca, des aluminosilicates, en cas échéant, Li, Na, et Mg, ainsi que les composants suivants:

   a) du verre d'aluminosilicate latent-hydraulique ayant un rapport, qui est

$$(CaO+MgO+Al_2O_3)/SiO_2 > 1$$

   et
   b) un activateur alcalin en forme de verre d'eau alcaline de la formule moléculaire (I)

$$a(M_2O)* x(SiO_2)* y(H_2O) \qquad (I)$$

   dans laquelle M = Li, Na, K, a = 0-4 ainsi que x = 0-5 et y = 3-20,
   dans laquelle le rapport molaire de Ca/Si est < 1, le rapport molaire de Al/Si est < 1 et le rapport molaire de M/Si est > 0,1.

2. Anode métallique galvanique selon la revendication 1, **caractérisée par le fait que**, l'activateur alcalin comprend au moins un hydroxyde alcalin.

3. Anode métallique galvanique selon la revendication 1 ou 2, **caractérisée par le fait que** le liant hydraulique, comme un autre composant c), comprend un additif latent-hydraulique, qui est capable de lier des ions de calcium.

4. Anode métallique galvanique selon la revendication 3, **caractérisée par le fait que** le composant c) est un aluminosilicate latent-hydraulique pauvre en calcium ayant une teneur en CaO de < 15 % en poids et particulièrement consiste en un pouzzolane naturel, tel que la cendre volcanique ou le tuf moulé, préférablement en une argile minéralière thermiquement activée entre 500°C et 900°C.

**5.** Anode métallique galvanique selon l'une des revendications précédentes, **caractérisée par le fait que** le liant hydraulique comprend les composants a), b) et en cas échéant c) dans les quantités suivantes a) 100-300 parties en poids du verre d'aluminosilicate latent-hydraulique; b) 20-150 parties en poids d'activateur alcalin; c) en cas échéant, 50-200 parties en poids d'additif latent-hydraulique; dans laquelle le rapport molaire de Al/Si est < 0,8 et le rapport molaire de Ca/Si est < 0,9.

**6.** Anode métallique galvanique selon l'une des revendications précédentes, **caractérisée par le fait que** le liant hydraulique en outre contient au moins un polymère, organique sélectionné parmi les polyacrylates, le latex, les copolymères polyacrylate, les copolymères polystyrène et les butadiènes polystyréniques.

**7.** Anode métallique galvanique selon l'une des revendications précédentes, **caractérisée par le fait que** le liant hydraulique comprend en outre un sel de zinc soluble, préférablement un hydrate de sulfate de zinc et/ou un sel de lithium, préférablement le chlorure de lithium, et/ou le liant hydraulique comprend en outre un agent complexant pour le zinc, préférablement un polyethylènimine ou un polyamide, et/ou **par le fait que** le liant hydraulique comprend en outre un épaississant et/ou un agent thixotropique, préférablement un éther de cellulose alkyl et/ou un amidon d'éther alkylique.

**8.** Anode métallique galvanique selon l'une des revendications précédentes, **caractérisée par le fait que** le verre aluminosilicate latent-hydraulique est mélangé avec de peroxyde d'hydrogène.

**9.** Anode métallique galvanique selon l'une des revendications précédentes, **caractérisée par le fait que** le liant hydraulique est présent en tant qu'un système à deux composants, dans laquelle l'activateur alcalin est dissolu dans l'eau et la teneur d'activateur alcalin et en cas échéant d'hydroxydes alcalins y contenus est compris entre 10 et 50 % en poids.

**10.** Anode métallique galvanique selon l'une des revendications précédentes, **caractérisée par le fait que** le liant hydraulique est fait réagir à une matrice de liant avec de l'eau, préférablement dans une proportion de 1:0,5 à 1:4, relatif à la matière sec du liant.

**11.** Anode métallique galvanique selon la revendication 10, dans laquelle la matrice de liant est **caractérisée par** un rapport de $CaO/(SiO_2 + Al_2O_3)$ < 0,9, préférablement < 0,5, un rapport de $CaO/SiO_2$ < 0,9, préférablement < 0,5, et un rapport de $M_2O/(SiO_2 + Al_2O_3)$ > 0,01, préférablement > 0,05.

**12.** Anode métallique galvanique selon la revendication 11, dans laquelle la matrice de liant est **caractérisée par** un rapport de $CaO/(SiO_2 + Al_2O_3)$ < 0,5, préférablement < 0,3, un rapport de $CaO/SiO_2$ < 0,8, préférablement < 0,5, et un rapport de $M_2O/(SiO_2 + Al_2O_3)$ > 0,02, préférablement > 0,07.

**13.** Anode métallique galvanique selon l'une des revendications 1-12, **caractérisée par le fait que** le liant hydraulique est fait réagir avec de l'eau et d'additifs, préférablement **caractérisés par** un rapport additifs/liant de 1:0,25 à 1:4, et par un rapport liant/eau de 0,25:1 à 2:1, particulièrement préférablement par un rapport additifs/liant de 1:0,2 à 1:5, et un rapport liant/eau de 0,3:1 à 2,5:1.

**14.** Anode métallique galvanique selon l'une des revendications précédentes, **caractérisée par le fait qu'**elle est en forme d'un grille, un filet, une tôle perforée ou est filiforme et/ou **par le fait que** le métal est le zinc.

**15.** Anode métallique galvanique selon l'une des revendications précédentes, **caractérisée par le fait qu'**elle est en forme de plaque, cube, cylindre ou grille, préférablement en forme de plaque.

**16.** Utilisation d'une anode métallique galvanique selon l'une des revendications précédentes pour la protection anticorrosion d'acier, particulièrement d'acier dans du béton armé.

**17.** Utilisation d'un liant hydraulique pour la fabrication d'anodes métalliques pour la protection anticorrosion d'acier, préférablement d'acier dans du béton armé, dans laquelle le liant hydraulique comprend K, Ca, des aluminosilicates, en cas échéant, Li, Na, et Mg, ainsi que les composants suivants:

a) du verre d'aluminosilicate latent-hydraulique ayant un rapport, qui est

$$(CaO+MgO+Al_2O_3)/SiO_2 > 1$$

et

b) un activateur alcalin en forme de verre d'eau alcaline de la formule moléculaire (I)

$$a(M_2O)* x(SiO_2)* y(H_2O) \qquad (I)$$

dans laquelle M = Li, Na, K, a = 0-4 ainsi que x = 0-5 et y = 3-20, dans laquelle le rapport molaire de Ca/Si est < 1, le rapport molaire de Al/Si est < 1 et le rapport molaire de M/Si est > 0,1.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 13442004 A
- EP 1135538 A
- EP 668373 A
- US 4506485 A
- WO 200503061 A
- US 6572760 A
- WO 0046422 A
- AT 177072 T
- DE 59109105 D
- US 5372640 A